# EUROPEAN PATENT SPECIFICATION

(11) **EP 1 847 771 B1**
(45) Date of publication and mention of the grant of the patent: **18.02.2015**
(21) Application number: 06252088.7
(22) Date of filing: 18.04.2006
(51) Int. Cl.: F21V 21/18, F16M 11/04, F16F 3/06

(54) **Balance system**
Ausgleichssystem
Système d'équilibrage

(43) Date of publication of application: 24.10.2007
(73) Proprietor: Anglepoise Holdings Limited, Waterlooville, Hampshire, PO7 7XN (GB)
(72) Inventor: Herder, Just, 2595 ED Den Haag (NL)
(74) Representative: Pedder, James Cuthbert

(56) References cited:
- EP-A- 0 024 433
- WO-A1-91/19960
- WO-A1-99/17975
- FR-A- 2 086 976
- GB-A- 1 391 591
- NL-C2- 1 009 886
- HERDER J L: "DESIGN OF SPRING FORCE COMPENSATION SYSTEMS" MECHANISM AND MACHINE THEORY, OXFORD, GB, vol. 33, no. 1/2, 1998, pages 151-161, XP002101730

## Description

This invention relates to a balance system and, in particular, to a balance system in which a beam is supported in equilibrium solely by supporting elements which include a spring.

The Anglepoise lamp is an example of a statically balanced mechanism and is well known. The Anglepoise lamp has been manufactured since the 1930's and the well known Anglepoise configuration of three springs at a base and a lamp mounted on trunnions through the centre of gravity of the lamp.

In the classic Anglepoise lamp design, the head of the lamp can be moved to any location permitted by the range of movement of the supporting arm and, when released by the user, the lamp remains in that position in a statically balanced equilibrium.

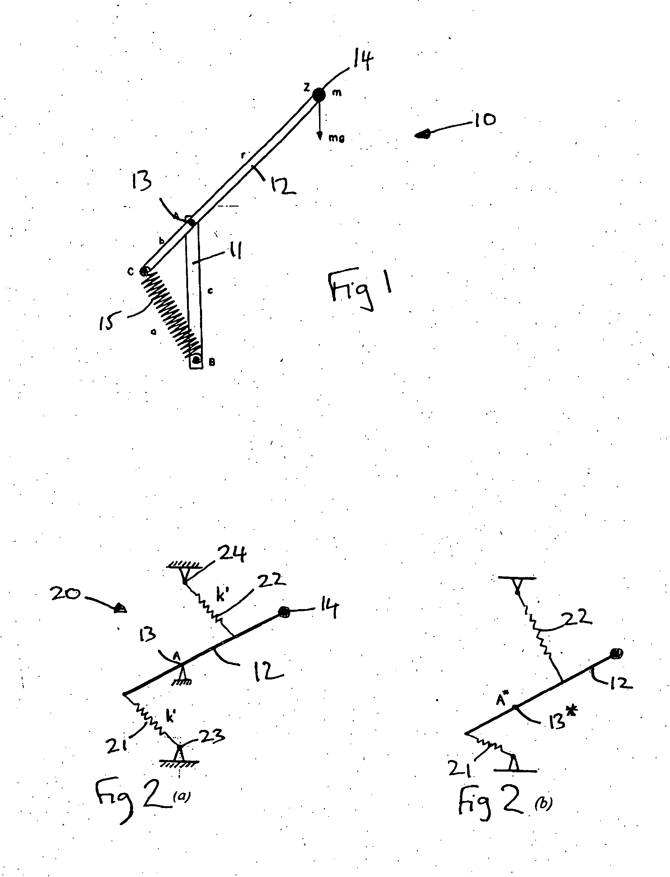

There are almost endless varieties in the design of statically balanced mechanisms, but some features are common to all. In the simplest form, the spring and lever gravity equilibrator 10 shown in Figure 1, the majority of statically balanced mechanisms are combinations of spring and lever balances.

In Figure 1, the equilibrator 10 comprises a rigid post 11, at the top of which a beam 12 is pivotably connected at point 13. A mass 14 is attached to one end of the beam 12 and the other end of the beam, on the opposite side of the pivot 13, is connected to a spring 15 which is fixed to the base of the post 11.

It can be shown that the tension in the spring is proportional to its overall length and that the spring stiffness k must equal mgr/bc. Provided these conditions are satisfied, the mechanism is in equilibrium at every point within its art of travel. For the tension in the spring to be brought to zero, its length must also go to zero, i.e. the spring has zero-free-length.

Thus, it can be shown that the lever arms of both the masses weight and the spring force vary with sin θ. The sin θ dependencies is universal in this family of mechanisms.

The result that spring force is proportional to spring length is also universal. Thus, in any scheme where the balancing force is proportional to a length, then using an appropriate zero-free-length spring, the system can be statically balanced. If instead a spring to be used where the force is proportional to the extension, then a finite number of equilibrium positions will exist. Thus, zero-free-length springs and sin θ dependent lever arms are the generic features of a statically balanced mechanism.

For a "normal" spring, the force-deflection characteristic obeys the familiar Hooke's law result, where force is proportional to extension, the constant of proportionality being the spring stiffness k. If however a spring is wound with an initial tension, the coils of the spring will remain closed until the applied force exceeds that initial tension. If the initial tension is equal to the spring stiffness times the springs initial length then the force becomes equal to the overall length of the spring. Thus, the force has become proportional to the spring length. If the free length is defined as the intersection of the force-length characteristic with the length axis, then for springs where the initial tension is equal to the spring stiffness times initial length, then the free length is zero. Similarly, for a zero-free-length spring, the magnitude of the value of the intersection of the force-extension characteristic with the extension axis is the initial length.

Introducing initial tension in a spring involves twisting the wire as it is coiled and there are many well known methods for carrying out this process.

A known floating suspension system 20 is shown in Figure 2. The floating suspension is, essentially, an extension of the gravity equilibrator as shown in Figure 1.

The single spring of Figure 1 may be replaced by two springs 21, 22 as shown in Figure 2a and the balance maintained by halving the spring rate: k' = ½k, where k is the stiffness of the original spring. In the arrangement in Figure 2A, the beam 12 is pivotably mounted about a point 13. The lower end of the beam is connected to spring 21 which is, itself, connected to a rigid base point 23. The opposite side of the beam is connected to spring 22 which is connected to base point 24. It is important that the two base points and the pivot 13 are vertically aligned. Resolving the forces acting on the rod shows that for all orientations of the rod, the spring forces are equal and opposite. Hence, the pivot reaction of the rod is constant and equal and opposite to the weight of the mass. Since this reaction is directed vertically upwards, removal of the pivot 13 causes the rod 12 to sink down to obtain a new equilibrium position as shown in Figure 2b. The loss of the pivot reaction is countered by the vertical force component from the top spring 22 increasing and that from the bottom spring 21 decreasing, both in proportion to the vertical deflection. For equilibrium to occur, the components of the spring forces along the rod must still cancel each other out, so the point 13 moves vertically downward to point 13*. 13* is stationary and has become a virtual pivot.

The floating suspension 20 is statically balanced about the horizontal axis through the vertical pivot 13* and is also free to rotate about the vertical axis, provided the spring connections of the springs 21, 22 to the base points 23, 24 are suitably designed.

One of the problems with the arrangements described above is that there is virtually no friction within the equilibrium system and therefore any slight force on the mass or beam would cause the beam to rotate until it reached its limit of rotation. If applied to for example, a desk lamp, it would require the user to stabilise the lamp each time he or she changed the position of the lamp. It also requires the desk lamp to be in a wind free/ventilation free environment, otherwise the lamp would easily be displaced from its positioning.

NL10098866 discloses an object supported at one end of an arm. The arm is an extension of one side of a hinged parallelogram of rods. The corner of the parallelogram opposite the end of the carrying arm is attached to a stationery pivot point. Springs in tension are connected between the parallelogram and two other stationary points. All three stationary points are mounted in the same vertical line.

GB 1 391 591 discloses a load supporting means whereby a load-supporting platform is supported solely by means of multiple supporting elements, including connecting ties and springs, if need be supplemented by elastomeric cords, these elements being arranged so as to maintain the load-supporting platform in a state of static equilibrium, depending on the load. In order for the equilibrium position to coincide with a constant datum position spring anchorages can be adjusted.

Thus, the present invention aims to provide a balance system in which stability is introduced and in which movement of the mass and beam can be controlled.

Thus, the present invention provides a lamp, comprising: a beam on which, in use, a load is supported; and at least three supporting elements, each including a spring and being connected to the beam, so as to maintain the beam in an equilibrium position; wherein at least two of the supporting elements are positioned such that one is on each side of a vertical plane through the beam, thereby providing rotational stability to the beam, and the supporting elements are arranged so as to provide static equilibrium of the beam at any position within the range of movement of the beam, and wherein the beam is supported solely by the supporting elements.

The invention addresses the problem that the beam can be rotated about the vertical, but has no stability and is free to swing from side to side. The problem is solved by splitting at least one of the springs (supporting elements) in two.

The supporting elements preferably exhibit zero-free-length spring behaviour.

The springs may be zero-free-length springs. The supporting elements preferably comprise a connecting tie. The supporting elements are preferably connected between the beam and a fixed base.

The connecting tie is preferably passed around a guide point, such as a pulley, or, alternatively, passes through a cable channel, thereby forming a Bowden cable which, in the preferred arrangement, is curved. Preferably, the curvature of the cable channel is at least 180°, although other curvatures, e.g. 90°, can be used.

The connecting tie is preferably flexible, such that it can support tension, but not compression.

The connecting tie may be a belt, chain, tape or other suitable element, but is preferably a string or cable.

Examples of the present invention will now be described with reference to the accompanying drawings, in which:
Figure 1 shows a known simple static equilibrium system;
Figures 2A and 2B show a schematic representation of further known balance systems;
Figures 3A and 3B show schematic representation of one example of the present invention;
Figure 4 shows a practical implementation of the arrangement of Figure 3A and 3B;
Figure 5 shows a further example of the present invention including an additional stabilising spring;
Figure 6A and 6B and Figures 7A and 7B show schematic representations of further examples of the present invention;
Figure 8 shows a spring and pulley arrangement for use with the present invention; and
Figures 9A-E show a schematic example of the present invention with the beam in various positions.

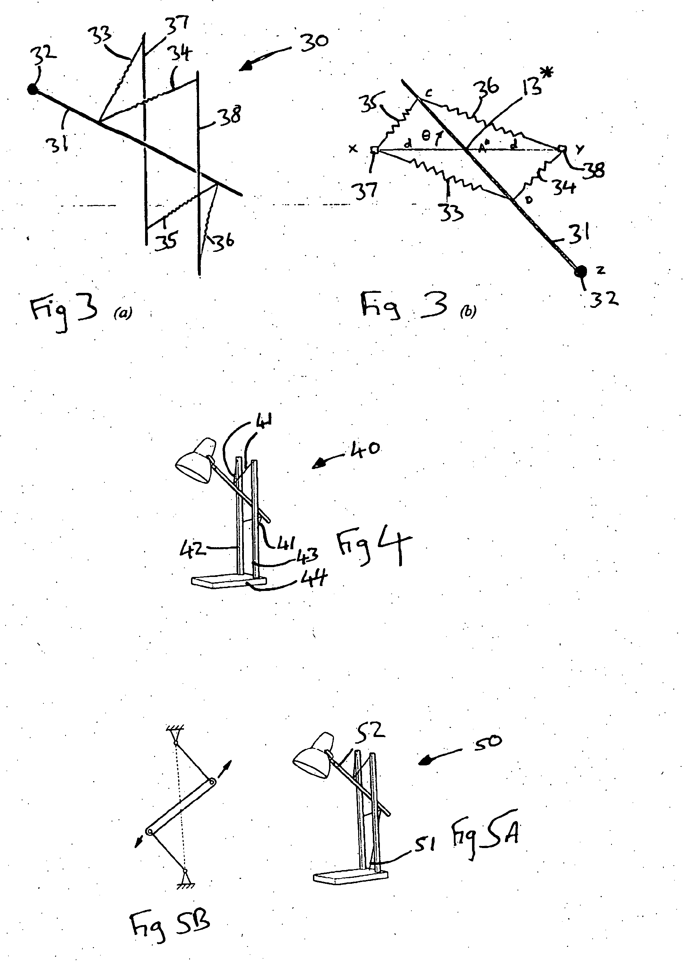

Figure 3 shows a schematic arrangement of a statically balanced system according to the present invention. Although the arrangement shown in Figures 3A and 3B provides two pairs of springs, the invention would equally work for instance with a single spring above the beam and one pair of springs below the beam or vice versa. The arrangement shown in Figures 3A and 3B is statically balanced both about the horizontal axis, as previously described, but also about the vertical axis. All the springs in this example are zero-free-length springs.

A beam 31 on which a mass 32 is mounted at one end, is supported by a pair of upper springs 33, 34 and a pair of lower springs 35, 36. Respective springs of each pair are connected to vertical support posts 37, 38. The springs of each pair are connected to the beam at the same location but extend from the beam to different support posts 37, 38.

Figure 3B shows a schematic plan view of the arrangement of Figure 3A and, from this, it is clear that both the generic features of a statically balanced mechanism are present. Firstly, the lever arms of the springs about the virtual pivot at 13* are sin θ dependent and the springs are zero-free-length. As the system is symmetrical, it follows that it must be statically balanced.

The weight of the mass 32 is now taken by the four vertical components of the springs and the system remains balanced. The rotation about the vertical axis becomes simple to understand when resolved in the horizontal plane going through the pivot point, as shown in Figure 3B. Projecting all the spring forces on this plane, it is clear that all horizontal components of the spring forces cancel each other out in any orientation of the beam. Thus, the rotation that the vertical axis is balanced as in the same way the rotation that the horizontal axis is balanced. The system thus has two degrees of freedom for the floating suspension, but with added stability to the rotation about the vertical axis. The system provides greater stability, especially about the vertical axis when normal springs and connecting ties are used in place of zero-free-length springs, than known systems.

An example of how this system might be utilised in a lamp 40 is shown in Figure . 4 in which the zero-free-length springs have been replaced by standard springs (not shown) and connecting ties 41, the connecting ties exiting the support columns 42, 43 above and below the beam. The springs are housed in the base 44 to improve the appearance of the lamp, as the springs are no longer on display. This has the advantage of allowing the beam to be rotated until it contacts one of the vertical columns. It is aesthetically better looking and, using cables, permits the control of friction more easily. The further advantage is that the springs' free length can exhibit zero-free-length performance characteristics when the connecting ties are suitably pretensioned. Alternatively, the springs could be housed in the beam itself.

The beam has six degrees of freedom, four of which are restrained by the cables. The remaining two (rotation about the rod axis and translation along the rod axis), result in a rotation mode and a swing mode. This is particularly undesirable in a lamp where movement of the light source will be distracting for the user. The rotation mode can be reduced by increasing the distance between the connections to the beam of the pairs of springs/connecting ties.

To overcome the swing mode shown, one or more additional springs or connecting ties can be fitted to the model. When only a single stabilising cable is used, the virtual pivot will be moved, either upwards or downwards, towards the stabilising spring. If an equal number of additional equal springs are provided above and below the beam, the virtual pivot will, of course, remain in the same position. It is also necessary to adjust the lever arm of the mass to counteract the additional spring force by moving the mass further from the pivot. Placement of the stabilising spring is largely a design choice, subject to the following constraints: it should not be parallel with the planes running through each pair of support cables; and it preferably lies in the vertical plane through the rod.

Thus, further improvement on the arrangement shown in Figures 3A and 3B can be-seen in Figure 5A. An extra connecting tie 51 and spring is attached at the rear of the-beam to a point vertically below the-pivot point. This increases the effect of triangulation with the lower springs to control more accurately the swing of the beam about a vertical axis.

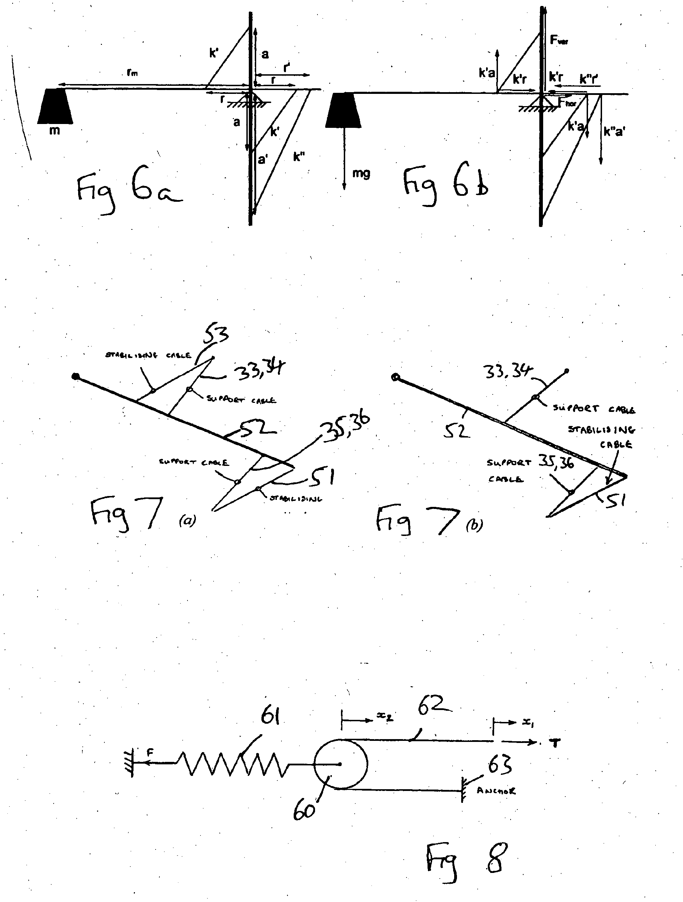

In the example shown in Figure 5A, the additional stabilising spring/connecting tie is connected to the same point on the beam as the lower pair of springs, although it could be connected at a different location, as shown in Figure 7A and 7B. In addition, Figure 7A shows an example in which a stabilising element is provided both above and below the beam 52.

Figure 6A and 6B show a schematic representation of the forces and components involved in the five spring system and, when resolving the forces, it is clear that the horizontal or vertical deflection caused by the additional springs or spring can be minimised by either moving the mass further from the pivot, or by increasing or decreasing where appropriate the relative stiffnesses of the springs.

Figure 8 shows the provision of a pulley 60 at the end of a spring 61, arranged such that the connecting tie 62 passes from the beam, around the pulley and is fixed to a mounting point 63. By using this arrangement, the size of the base of any lamp or any other device in which the balance system is utilised can be minimised. The arrangement shown halves the spring extension, but the spring rates must be four times greater.

The systems above are all perfectly statically balanced and therefore do not require any force to move the mass from one position to another. In order to make the system more suitable for use in, for example, a desk lamp, it is necessary to add some controllable friction to the system, so that a desired position would not be lost until a voluntary force is applied. Although excessive friction is to be avoided, it should not altogether be eliminated. Friction allows for small errors, such as deviations from the ideal in the springs and inaccurate mass positioning and will prevent unwanted movement of the mechanism by draughts etc.

When using standard springs and connecting ties, in place of zero-free-length springs, the connecting ties can be passed around pulleys, but these require the path of the cable to be straight in between each pulley and the pulleys provide only a fixed amount of friction.

There are two preferred solutions to get the cables to the beam and each of them has a way of controlling the friction: the use of pulleys and the use of low friction flexible cable housings such as Bowden cables. Pulleys have the advantage of allowing the cable to come out at different angles, both the wrapping angle and the lateral exit angle. Pulleys provide a low friction solution, but their main disadvantage is that the path the cable has to be straight between each pulley. Cable housings allow the cables to run in two dimensions as well as three dimensions, whereas pulleys only let cables run in two dimensions and one plane. This gives much more freedom to the overall design. A further advantage is that the cable housings have increasing limiting friction as the force increases, whereas pulleys have a fixed friction.

The friction of both pulleys and cable housings are dependent on the cable exit angle, that is the angle in which the cable comes out of the vertical column to reach their attachment point on the beam. The pulleys can take a very large exit angle if they have a deep groove, before the cable slips away. The cable housings however are more dependent on the exit angle. The friction it may produce increases with the exit angle, but it does not have a major impact on the system. It can be shown that, when using Bowden cables, it is the angle of the curve path only which determines the friction imparted by the Bowden cable. The radius of curvature of the cable path has no bearing on the friction.

In a first example, the resistance is developed by friction in the pulleys around which the connecting ties pass. Although the pulleys do provide some friction, a preferred example is the provision of Bowden cables in which the friction in the cables is dependent only on the tension and the sum of the angles through which each individual cable turns. Hence the inner cable will never go slack unless the spring tension goes to zero.

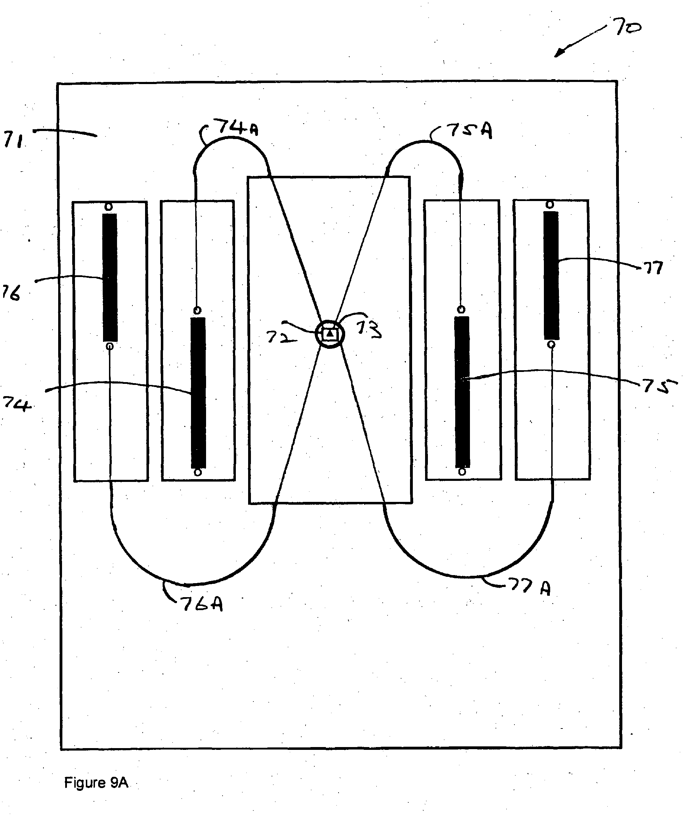

Figures 9A to E show a schematic example 70 of the invention, in which Bowden cables have been used to connect normal springs to the beam. A framework 71 is used to mount the Bowden cables and beam 72 in a simple manner. A mass 73 is supported on the end of beam 72.

In the following description, left and right relate to the orientation shown in the Figures.

The beam is supported by upper left 74 and right 75 springs and lower left 76 and right 77 springs. The springs are, in this example, mounted vertically, but in a practical device, the springs could also be located in the beam or in the base. The springs are connected to respective Bowden cables 74a to 77a via pulleys as described with respect to Figure 8 and each Bowden cable curves through 180° before exiting the framework 71 and connecting to the beam 72.

In Figure 9A, the beam 72 is substantially horizontal and all the springs 74 to 77 are in the neutral position. The upper 74, 75 and lower 76, 77 springs are equally displaced on each side, but the upper springs are more extended to compensate for the weight of the arm.

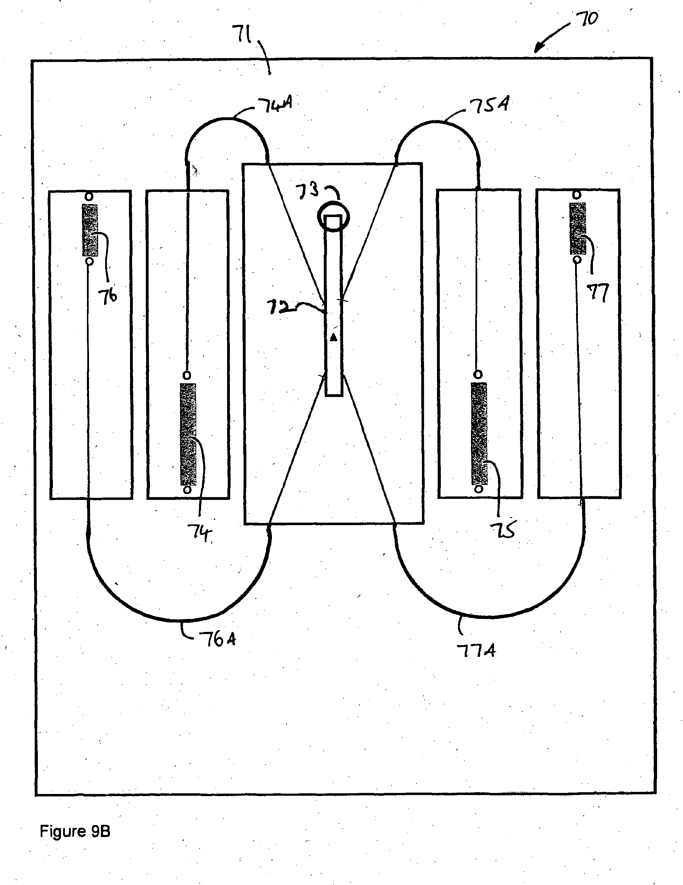

In Figure 9B, the beam 72 is raised and the springs are less extended than in the neutral position. The upper and lower springs are equally displaced on each side, but the upper springs are extended further than the lower springs to compensate for the weight of the arm.

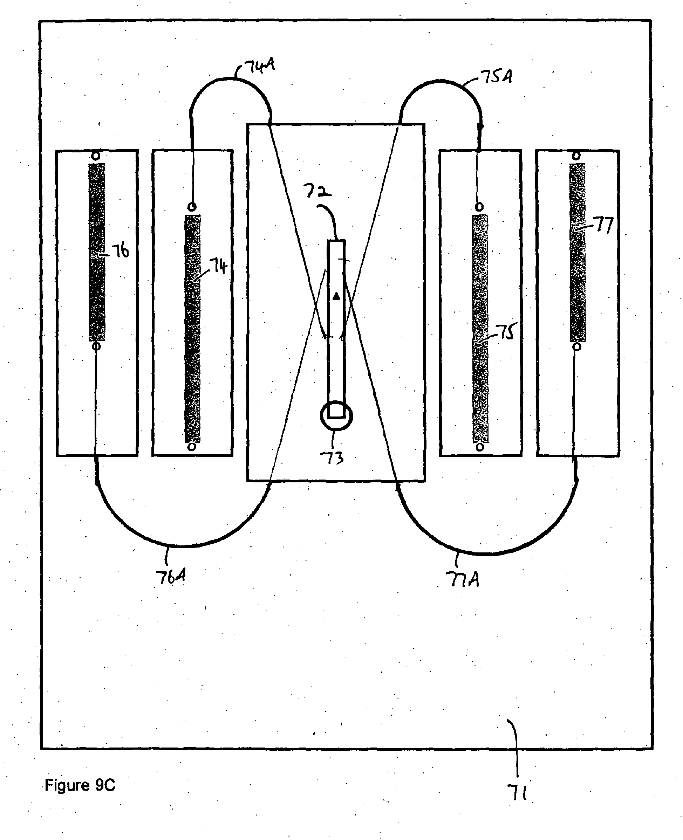

In Figure 9C, the beam 72 is lowered and the springs are more extended than in the neutral position. The upper and lower springs are equally displaced on each side, but the upper springs are extended further than the lower springs to compensate for the weight of the arm.

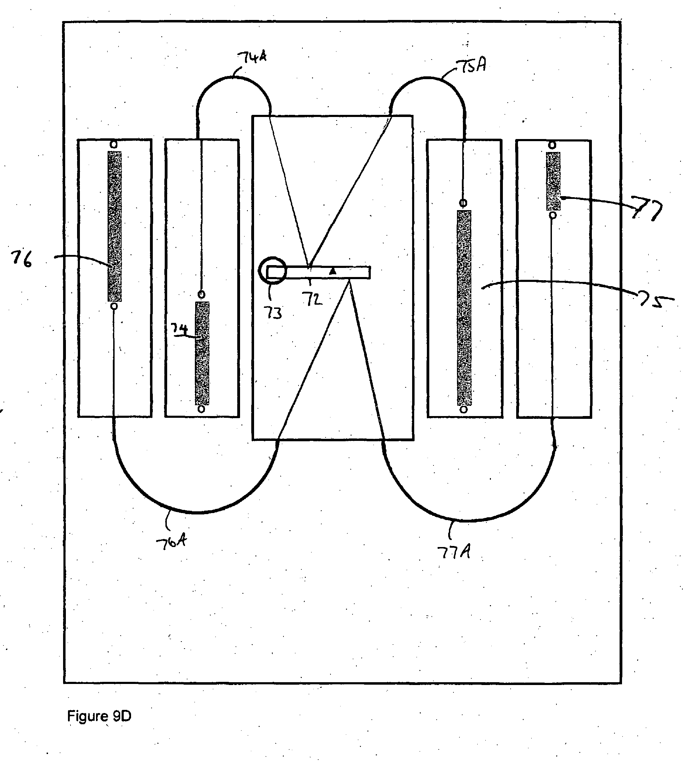

In Figure 9D, the lower left spring 76 is extended, the upper left spring 74 is contracted, the upper right spring 75 is extended and the lower right spring 77 is contracted, relative to the neutral position. The arm is pictured moved to the left as shown.

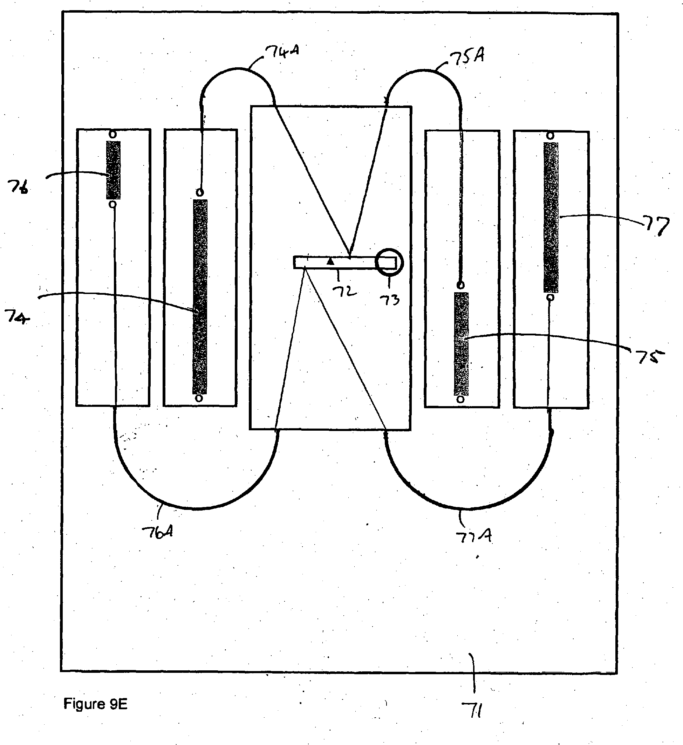

In Figure 9E, the arm is moved to the right and the lower left spring 76 is contracted, the upper left spring 74 is extended, the upper right spring 75 is contracted and the lower right spring 77 is extended, relative to the neutral position.

In all examples, the beam is in an equilibrium position and is stationary.

## Claims

1. A lamp, comprising:
a beam (31) on which, in use, a load (32) is supported; and
at least three supporting elements (33,34,35,36), each including a spring and being connected to the beam (31), so as to maintain the beam (31) in an equilibrium position;
wherein at least two of the supporting elements (33,34,35,36) are positioned such that one is on each side of a vertical plane through the beam (31), thereby providing rotational stability to the beam (31), and
wherein the supporting elements (33,34,35,36) are arranged so as to provide static equilibrium of the beam (31) at any position within the range of movement of the beam (31); and of
wherein the beam (31) is supported solely by the use of the supporting elements (33,34,35,36).

2. A lamp according to claim 1, wherein the supporting elements (33,34,35,36) exhibit zero-free-length behaviour in use.

3. A lamp according to claim 1 or claim 2, wherein the spring is a zero free length spring.

4. A lamp according to any one of the preceding claims, wherein at least one of the supporting elements (33,34,35,36) additionally comprises a connecting tie (62).

5. A lamp according to claim 4, wherein the connecting tie (62) connects one of the springs to the beam (31) and passes around a guide point.

6. A lamp according to claim 4, wherein the connecting tie (62) is flexible in a direction along the plane.

7. A lamp according to claim 6, wherein the connecting tie (62) is a belt, chain, tape or Bowden cable.

8. A lamp according to any one of the preceding claims, further comprising at least one further supporting element including a spring (33,34,35,36) lying in the vertical plane passing through the beam (31).

9. A lamp according to any one of claims 1 to 7, further comprising at least one pair of further equal supporting elements each including a spring (33,34,35,36), one on each side of the vertical plane passing through the beam (31).

10. A lamp according to any one of the preceding claims, wherein the springs are mounted on the beam (31).

## Patentansprüche

1. Eine Lampe, die Folgendes beinhaltet:
einen Balken (31), auf dem bei Gebrauch eine Last (32) getragen wird; und
mindestens drei Trägerelemente (33, 34, 35, 36), wobei jedes eine Feder umfasst und mit dem Balken (31) verbunden ist, so dass der Balken (31) in einer Gleichgewichtsstellung gehalten wird;
wobei mindestens zwei der Trägerelemente (33, 34, 35, 36) so positioniert sind, dass sich eines auf jeder Seite einer vertikalen Ebene durch den Balken (31) befindet, wodurch dem Balken (31) Rotationsstabilität verliehen wird, und
wobei die Trägerelemente (33, 34, 35, 36) so angeordnet sind, dass sie dem Balken (31) in einer beliebigen Position innerhalb des Bewegungsbereichs des Balkens (31) ein statisches Gleichgewicht verleihen; und
wobei der Balken (31) allein durch den Gebrauch der Trägerelemente (33, 34, 35, 36) getragen wird.

2. Eine Lampe gemäß Anspruch 1, wobei die Trägerelemente (33, 34, 35, 36) bei Gebrauch das Verhalten einer Nulllängenfeder zeigen.

3. Eine Lampe gemäß Anspruch 1 oder Anspruch 2, wobei die Feder eine Nulllängenfeder ist.

4. Eine Lampe gemäß einem der vorhergehenden Ansprüche, wobei mindestens eines der Trägerelemente (33, 34, 35, 36) zusätzlich ein Verbindungsstück (62) beinhaltet.

5. Fine lampe gemäß Anspruch 4 wobei das Verbindungsstück (62) eine der Federn mit dem Balken (31) verbindet und um einen Führungspunkt läuft.

6. Eine Lampe gemäß Anspruch 4, wobei das Verbindungsstück (62) in eine Richtung entlang der Ebene biegbar ist.

7. Eine Lampe gemäß Anspruch 6, wobei das Verbindungsstück (62) ein Gurt, eine Kette, ein Band oder ein Bowdenzug ist.

8. Eine Lampe gemäß einem der vorhergehenden Ansprüche, die ferner mindestens ein weiteres Trägerelement (33, 34, 35, 35), das eine Feder umfasst, beinhaltet, welches in der vertikalen Ebene, die durch den Balken (31) läuft, liegt.

9. Eine Lampe gemäß einem der Ansprüche 1 bis 7, die ferner mindestens ein Paar weitere gleichwertige Trägerelemente (33, 34, 35, 36), die jeweils eine Feder umfassen, beinhaltet, eines auf jeder Seite der vertikalen Ebene, die durch den Balken (31) läuft.

10. Eine Lampe gemäß einem der vorhergehenden Ansprüche, wobei die Federn an dem Balken (31) angebracht sind.

## Revendications

1. Une lampe, comprenant :
un faisceau (31) sur lequel, en cours d'utilisation, une charge (32) est supportée ; et
au moins trois éléments d'appui (33, 34, 35, 36), chacun contenant un ressort et connecté au faisceau (31), afin de maintenir le faisceau (31) dans une position d'équilibre ;
où au moins deux des éléments d'appui (33, 34, 35, 36) sont positionnés de telle sorte que chacun est de chaque côté d'un plan vertical passant par le faisceau (31), fournissant une stabilité de rotation au faisceau (31), et
où les éléments d'appui (33, 34, 35, 36) sont disposés de manière à fournir l'équilibre statique du faisceau (31) dans n'importe quelle position à portée du déplacement du faisceau (31) ; et
où le faisceau (31) est supporté uniquement par l'utilisation des éléments d'appui (33, 34, 35, 36).

2. Une lampe selon la revendication 1, où les éléments d'appui (33, 34, 35, 36) présentent un comportement de longueur libre nulle lors de l'utilisation.

3. Une lampe selon la revendication 1 ou la revendication 2, où le ressort est un ressort de longueur libre nulle

4. Une lampe selon l'une des revendications précédentes, où au moins un des éléments d'appui (33, 34, 35, 36) comporte également une connexion de serrage (62).

5. Une lampe selon la revendication 4, où la connexion de serrage (62) connecte l'un des ressorts au faisceau (31) et entoure un point de guidage.

6. Une lampe selon la revendication 4, où la connexion de serrage (62) est souple dans un sens le long du plan.

7. Une lampe selon la revendication 6, où la connexion de serrage (62) est une courroie, une chaîne, une bande ou un câble sous gaine (Bowden).

8. Une lampe selon l'une des revendications précédentes, comprenant en outre au moins un autre élément d'appui contenant un ressort (33, 34, 35, 36) étendu sur le plan vertical passant par le faisceau (31).

9. Une lampe selon l'une des revendications 1 à 7, comprenant en outre au moins une paire d'autres éléments d'appui égaux contenant chacun un ressort (33, 34, 35, 36), un de chaque côté du plan vertical passant par le faisceau (31).

10. Une lampe selon l'une des revendications précédentes, où les ressorts sont montés sur le faisceau (31).
